# EUROPEAN PATENT SPECIFICATION

(11) **EP 4 290 073 B1**
(45) Date of publication and mention of the grant of the patent: **26.11.2025**
(21) Application number: 22177428.4
(22) Date of filing: 07.06.2022
(51) Int. Cl.: F03D 13/40, B29D 99/00, F03D 1/06

(54) **TOOLS FOR SUPPORTING WIND TURBINE BLADES**
WERKZEUGE ZUR LAGERUNG VON WINDTURBINENSCHAUFELN
OUTILS DE SUPPORT DE PALES D'ÉOLIENNE

(43) Date of publication of application: 13.12.2023
(73) Proprietor: LM Wind Power A/S, 6000 Kolding (DK)
(72) Inventor: KOWALCZYK, Zbigniew, 6000 KOLDING (DK); KADAM, Radhika, 6000 KOLDING (DK)
(74) Representative: ZBM Patents - Zea, Barlocci & Markvardsen

(56) References cited:
- EP-A1- 3 882 459
- WO-A1-2019/195325
- WO-A1-2021/151448
- WO-A1-2021/180286
- NL-B1- 2 016 168

## Description

The present disclosure relates to tools and supporting assemblies for supporting a wind turbine blade, and methods for supporting the wind turbine blade in a post-moulding position.

### BACKGROUND

Modern wind turbines are commonly used to supply electricity to the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades have a root portion to attach the rotor hub and a tip portion at an opposite end. The root portion of the wind turbine blade usually has a generally round cross-section. Some other regions such as a profiled or an airfoil portion that is furthest away from the rotor hub, have a cross-section with an aerodynamic profile.

Wind turbine blade manufacturing may include several operations or stages, such as moulding. Post-moulding operations may be performed after moulding in a manufacturing plant. Wind turbine blades may be moulded using a vacuum assisted resin transfer moulding (VARTM). Post-moulding operations may comprise, for instance, installing aerodynamic devices or add-on features, repairment of the blade including grinding or sanding, scanning the wind turbine blade and/or finishing operations such as painting the wind turbine blade.

Wind turbine blades may be positioned substantially horizontal to facilitate post-moulding operations. For this reason, wind turbine blades must be properly supported, for instance through scaffolds.

It may be difficult to access all areas of the wind turbine blade to carry out the post-moulding operations. In the case of large blades with relatively large cross-sections, it may be even more difficult. The wind turbine blade may be rotated about its longitudinal axis to facilitate access to different areas of the wind turbine blade where post-moulding operations are intended to be performed. However, as the cross-section of the wind turbine blade varies along the length of the blade, a clearance between the wind turbine blade and the ground may increase towards the tip portion at some rotating positions. Thus, although the wind turbine blade is rotated about its longitudinal axis, some areas of the tip portion may still remain at a significantly greater height than the root portion.

Scaffolds are generally assembled to support and secure the wind turbine blade during post-moulding operations. Scaffolds are used for also providing work platforms for the operators. However, these scaffolds must be disassembled to allow the rotation of the blade at a desired rotational angle. During the rotation, the wind turbine blade is generally suspended from above using an overhead crane or some turning or rotating devices. After the rotation of the blade, scaffolds must then be reassembled. These tasks are repeated each time the wind turbine blade is rotated.

Using overhead cranes for suspending the wind turbine blade during the assembling and disassembling scaffolds, may represent a safety hazard. For example, the overhead crane may break down or the suspended load may fall. This can result in severe injuries and damages. For this reason, it is commonly forbidden for staff to work under a suspended load. Therefore, post-moulding operations on the unfinished wind turbine blade are avoided when the blade is suspended by the overhead crane.

Larger wind turbine blades may involve higher scaffolds. Assembling and disassembling higher scaffolds may generally involve more parts to be assembled and disassembled before and after rotation. This may mean longer manufacturing times.

In recent times there has been a trend to increase the size of wind turbine blades. The manufacture of significantly long wind turbine blades may increase the problems mentioned above.

The present disclosure provides examples of tools, systems, and methods that at least partially resolve some of the aforementioned disadvantages.

WO2019195325A1 discloses a wind turbine blade handling apparatus for rotating and lifting a blade.

EP3882459A1 discloses a mobile lifting apparatus for lifting a flat transport frame on which a component of a wind turbine is mounted, for removing or placing at least one self-propelled modular transporter below the transport frame.

### SUMMARY

In a first aspect, a tool for supporting a wind turbine blade in a post-moulding position according to claim 1 is provided. The tool comprises a base configured to rest on a ground, and a support structure configured to receive a region of the wind turbine blade when a leading edge of the wind turbine blade faces the ground. The support structure comprises a supporting surface configured to receive and support an outer surface of the region of the wind turbine blade. Furthermore, the tool comprises a lifting mechanism configured to move the support structure upwards and/or downwards relative to the base, and the base comprises : a connecting structure configured to face the leading edge of the wind turbine blade; and a pressure side column and a suction side column configured to be removably attached to the connecting structure.

According to this aspect, the tool may support the wind turbine blade in a post-moulding position. A post-moulding position is the position of the blade at which post-moulding operations can be performed. In a post-moulding position, the leading edge substantially faces the ground to allow staff to perform post-moulding operations on a relatively large area of the blade. For example, post-moulding operations may be performed on the opposite sides extending from the leading edge to trailing edge, i.e. on the suction side and/or pressure side. The suction side may be referred to as the downwind side and the pressure side may be referred to as the upwind side.

Furthermore, the support structure and thus the supporting surface may be lowered or lifted to bring the region of the wind turbine blade to a desired height. A distance from the ground to the supporting surface may be adjustable during a post-moulding operation. Accordingly, the region of the wind turbine blade, e.g. a tip portion of the wind turbine blade, may be lifted or lowered. So, the working height on the wind turbine blade may be adjustable in post-moulding operations.

The supporting surface fits or engages the outer surface of the region of the wind turbine blade. The wind turbine blade may thus be secured at a desired rotational angle. Undesirable vibrations, swinging or rotation of the wind turbine blade about its longitudinal axis may thus be prevented. Accordingly, lowering and lifting the region of the blade may be securely performed.

Since the clearance between the wind turbine blade and the ground may be reduced, accessibility to the wind turbine blade may be improved. As the wind turbine blade may be more accessible, the complexity of post-moulding tools may be reduced.

In addition, as the tool is configured to support the wind turbine blade when the leading edge of the wind turbine blade faces the ground, accessibility to the leading edge of the wind turbine blade may be improved. Accordingly, post-moulding operations related to the leading edge, e.g. installing leading edge protection elements, may thus be more easily performed.

If scaffolds are used, the height of scaffolds may be reduced. Therefore, the assembling and dismantling tasks of the scaffolds may be easier and/or quicker. This may also mean that the manufacture of the wind turbine blade may be faster.

The tool may be placed beneath the wind turbine blade, so the wind turbine blade may be lifted and supported from below. The use of overhead cranes in manufacturing plants may be reduced. Thus, work under suspended loads may be reduced or even avoided. Consequently, the risk of accidents may be minimized. Furthermore, wind turbine manufacturing time may be reduced..

In a further aspect, a supporting assembly for supporting a wind turbine blade in a post-moulding position is provided. The supporting assembly comprises a tool according to any of the examples herein disclosed. The supporting assembly comprises a rotating system configured to rotate the wind turbine blade about its longitudinal axis.

Advantages derived from this aspect may be similar to those mentioned regarding the previous aspects.

In yet a further aspect, a method for supporting a wind turbine blade during post-moulding operations according to claim 13 is provided. The method comprises positioning a leading edge of the wind turbine blade to face a ground. The method further comprises lifting a support structure of a tool for supporting the wind turbine blade to receive a region of the wind turbine blade. In addition, the method comprises receiving and supporting an outer surface of the region of the wind turbine blade with a supporting surface of the support structure. The method further comprises lowering the support structure to lower the region of the wind turbine blade.

Advantages derived from this aspect may be similar to those mentioned regarding the previous aspects.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 illustrates a simplified, internal view of a nacelle of a wind turbine according to one example;
Figure 3 shows a perspective view of a wind turbine blade according to one example;
Figure 4 shows a cross-sectional view of the wind turbine blade of figure 3;
Figure 5 schematically illustrates a frontal view of a tool supporting a wind turbine blade in a post-moulding position according to one example of the present disclosure;
Figure 6 shows a tool having a support structure in a lower position according to one example of the present disclosure;
Figure 7 shows the tool of Figure 6 having the support structure in a high position;
Figure 8 shows a perspective view of the support structure of Figure 6 receiving a wind turbine blade in an operating height;
Figure 9 schematically illustrates a tool according to one example of the present disclosure;
Figure 10 schematically illustrates a partial view of a tool according to one example of the present disclosure;
Figure 11 schematically illustrates a partial and perspective view of a support structure according to one example of the present disclosure;
Figures 12 - 14 schematically show views of the assembly of the tool in Figure 6 according to one example of the present disclosure; and
Figure 15 is a block diagram of a method for supporting a wind turbine blade during post-moulding operations according to one example of the present disclosure.

### DETAILED DESCRIPTION OF EXAMPLES

In these Figures, the same reference signs have been used to designate matching elements.

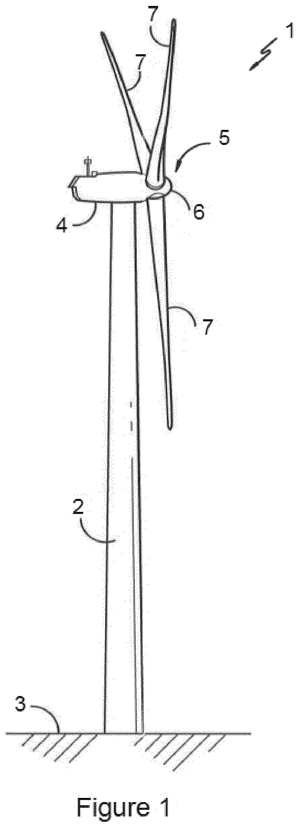

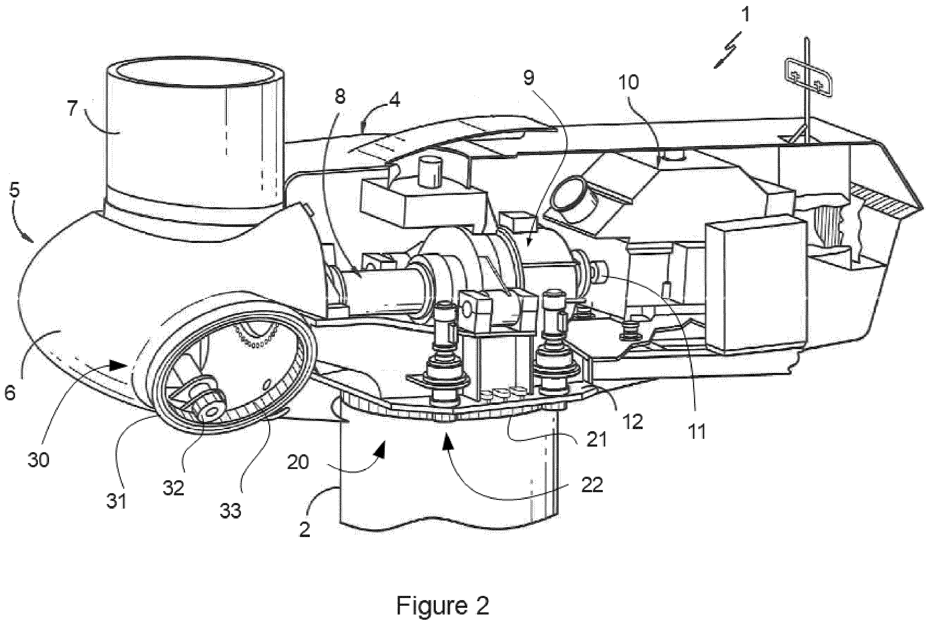

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one rotor blade 7 coupled to and extending outwardly from the rotor hub 6. For example, in the illustrated example, the rotor 5 includes three wind turbine blades 7. However, in an alternative embodiment, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 (Figure 2) positioned within the nacelle 4 or forming part of the nacelle to permit electrical energy to be produced.

Figure 2 illustrates a simplified, internal view of one example of the nacelle 4 of the wind turbine 1 of Figure 1. As shown, the electric generator 10 may be disposed within the nacelle 4. In general, the generator 10 may be coupled to the rotor 5 of the wind turbine 1 for generating electrical power from the rotational energy generated by the rotor 5. For example, the rotor 5 may include a main rotor shaft 8 coupled to the hub 6 for rotation therewith. The generator 10 may then be coupled to the rotor shaft 8 such that the rotation of the rotor shaft 8 drives the generator 10. For instance, in this figure, the generator 10 includes a generator shaft 11 rotatably coupled to the rotor shaft 8 through a gearbox 9. In other examples, the generator may be directly coupled to the rotor hub or to the rotor shaft.

It should be appreciated that the rotor shaft 8, gearbox 9, and generator 10 may generally be supported within the nacelle 4 by a bedplate or a support frame 12 positioned atop the tower 2.

The nacelle 4 is rotatably coupled to the tower 2 through a yaw system 20. The yaw system comprises a yaw bearing (not visible in Figure 2) having two bearing components configured to rotate with respect to the other. The tower 2 is coupled to one of the bearing components and the bedplate or support frame 12 of the nacelle 4 is coupled to the other bearing component. The yaw system 20 comprises a yaw annular gear 21 and a plurality of yaw drives 22 with a motor, a gearbox and a pinion for meshing with the annular gear for rotating one of the bearing components with respect to the other.

Blades 7 are coupled to the rotor hub 6 with a pitch bearing 31 in between the blade 7 and the rotor hub 6. The pitch bearing 31 comprises an inner ring and an outer ring (shown). A wind turbine blade may be attached either to the inner bearing ring or to the outer bearing ring, whereas the hub is connected to the other. A blade 7 may perform a relative rotational movement with respect to the rotor hub 6 when a pitch system 30 is actuated. The inner bearing ring may therefore perform a rotational movement with respect to the outer bearing ring. The pitch system 30 of Figure 2 comprises a pinion 32 that mesh with a pitch annular gear 33 provided on the inner bearing ring to set the wind turbine blade into rotation.

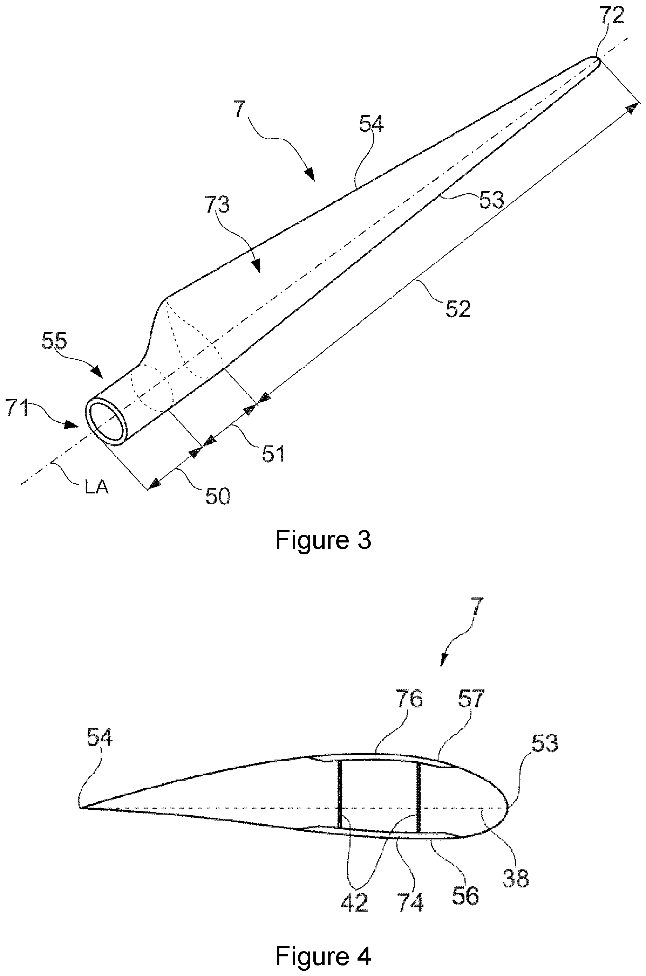

Figure 3 illustrates an example of a wind turbine blade. The wind turbine blade 7 extends in a longitudinal direction from a root end 71 to a tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

In the herein disclosed examples, the length of the wind turbine blade 7 from the root end 71 to the tip end 72 is above 80 meters, for instance, above 100 meters. However, wind turbine blades 7 of any length may be used as well.

The airfoil portion 52 has a shape designed to generate lift, whereas the blade root portion 50 has a circular or elliptical cross-section for structural considerations and easy mounting the blade to the rotor hub. The diameter or the chord of the blade root portion 50 may be constant along the entire root portion 50. At the transition portion 51, the profile gradually changes from the circular or elliptical cross-section of the blade root portion 50 to the airfoil profile of the airfoil portion 52.

The wind turbine blade 7 comprises a blade shell 73. The blade shell may comprise two blade shell parts, for example, a pressure side blade shell and a suction side blade shell. The pressure side blade shell may be joined, e.g. glued or bonded, to the suction side blade shell along joining lines along the leading edge 53 and the trailing edge 54. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (shown in Figure 3). The blade shell 73 may be made of fibre-reinforced polymer, e.g. glass fibre and/or carbon fibre.

The blade root portion 50 comprises a blade root attachment portion 55 configured to attach the blade root portion to the rotor hub. The blade root attachment portion may comprise a plurality of fastening members distributed along the root end. In some examples, the blade root end comprises a blade flange to face the first bearing component. The blade root end may comprise a structural stiffener, e.g., a stiffening plate or a stiffening ring, at the blade root attachment portion to increase the structural resistance of the blade root portion.

Figure 4 shows a cross-sectional view of the wind turbine blade of figure 3. A suction side 57 and a pressure side 56 extend from the leading edge 53 to the trailing edge 54. The wind turbine blade 7 further comprises a chord line 38 between the leading edge 53 and the trailing edge 54.

The wind turbine blade 7 comprises a load-carrying structure that provides stiffness to the wind turbine blade. In this example, the load-carrying structure comprises shear webs 42, such as a leading edge shear web and a trailing edge shear web. The load-carrying structure of this figure also comprises a first spar cap 74 arranged at the pressure side 56 and a second spar cap 76 at the suction side 57. In some examples, the shear webs 42 could be a spar box with spar sides, such as a trailing edge spar side and a leading edge spar side.

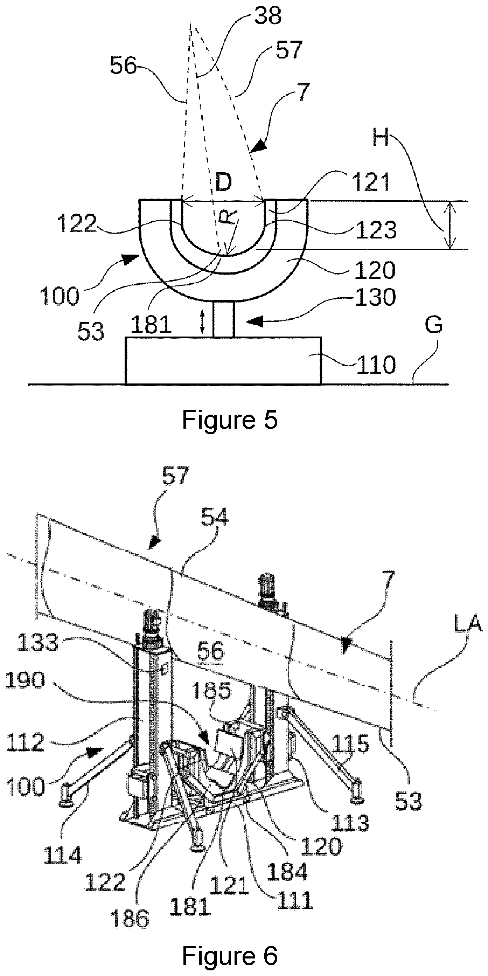

Figure 5 schematically illustrates a frontal view of a tool 100 supporting a wind turbine blade in a post-moulding position according to one example of the present disclosure. The tool 100 of figure 5 comprises a base 110 configured to rest on a ground G. The tool 100 further comprises a support structure 120 configured to receive a region of the wind turbine blade 7 when a leading edge 53 of the wind turbine blade 7 faces the ground. The support structure 120 comprises a supporting surface 121 configured to receive and support an outer surface of the region of the blade. The supporting surface 121 fits the outer surface of the region of the blade.

In the example of this figure, the supporting surface 121 fits the leading edge 53 of the wind turbine blade. In addition, the supporting surface 121 fits a region of the pressure side 56 and a region of the suction side 57. In this example, a pressure side fitting surface 122 fits the region of the pressure side 56 and a suction side fitting surface 123 fits the region of the suction side. In this example, the supporting surface 121 continuously extends from the pressure side fitting surface 122 to a bottom portion fitting surface 181 and from the bottom portion fitting surface 181 to the suction side fitting surface 123. The supporting surface 121 of this figure comprises a U-shaped configuration to fit the cross-sectional profile of the outer surface of the leading edge 53.

In this example, the cross-section of the wind turbine blade is in an upright position, i.e. the chord line 38 is substantially perpendicular to the ground G. However, in other examples, the chord line 38 may form an acute angle relative to the ground G. In some examples, when the blade is in the post-moulding position, the chord line 38 may form an angle between 45° - 90° relative to the ground G.

In Figure 5, some dimensions of the support structure 120 have been illustrated. Although the dimensions have been illustrated in Figure 5, the dimensions may correspond to other examples herein disclosed as well.

As can be seen, dimension D is a distance between the pressure side fitting surface 122 and the suction side fitting surface 123. Dimension D measures for example between 1.2 m and 1.5 m. Dimension H corresponds to a distance between the bottom portion fitting surface 181 and the uppermost end of the pressure side fitting surface 122 or the suction side fitting surface 123. Dimension H measures for example between 1.5 m and 1.8 m. Dimension R corresponds to a radius of the cross-sectional profile of the bottom portion fitting surface 181. Dimension R measures for example between 120 mm and 130 mm.

Said dimensions may allow the supporting surface 121 to fit the outer surface of the leading edge 53. Said dimensions substantially correspond to the outer shape of the leading edge at a position between half of the length of the wind turbine blade and the tip end of the wind turbine blade. The tool may thus be arranged between half of the length of the wind turbine blade and the tip end. In some examples, the tool may be arranged between one-third length of the wind turbine bladed closest to the tip end and the tip end. For example, for wind turbine blades of 70 - 120 meters, the bottom portion fitting surface 181 may fit a region of the leading edge arranged at a distance between 60 - 100 meters from the root end.

In Figure 5, the tool 100 also comprises a lifting mechanism 130 configured to move the support structure 120 relative to the base 110, for instance, an upwards or downwards movement.

The base 110, the support structure 120 and the lifting mechanism 130 may be manufactured out of any suitable materials to withstand loads, such as metallic materials.

As the tool 100 supports the wind turbine blade in a post-moulding position, post-moulding operations may be performed when the tool 100 is supporting the wind turbine blade 7. Post-moulding operations may be carried out in a wind turbine blade manufacturing plant after moulding the wind turbine blade and before shipping the blade from the manufacturing plant. In the present disclosure, a post-moulding operation refers to an installing and/or finishing operation performed on the wind turbine blade after the blade shells have been substantially cured and extracted from the blade moulds.

Examples of post-moulding operations that may be performed when the wind turbine is held by the tool 100 may comprise at least scanning or inspection operations (e.g. ultrasound scanning and/or optical inspections), surface finishing operations (e.g. polishing and/or painting), installation of aerodynamic features (e.g. vortex generator, T-spoilers and/or serrated features), installation of auxiliary systems (e.g. installation of lightning receptors and/or blade sensors), mounting reinforcements (e.g. leading and/or trailing edge reinforcements) or any suitable non-destructive testing activity.

The tool 100 may allow for operations to be performed on the wind turbine blade after a curing step of the wind turbine blade or wind turbine blade shell by using the Vacuum Assisted Resin Transfer Moulding Process (VARTM).

A length of the support structure 120 of Figure 5 may be defined between a root side and a tip side of the support structure 120. Such length of the support structure 120 may measure between 1 m and 1.8 m. This length follows a direction substantially parallel to the longitudinal axis of the blade when the wind turbine blade is received by the support structure 120.

Some wind turbine blades may comprise reinforcements that extend a length along the lengthwise direction of the wind turbine blade. In some examples, the length of the support structure 120 may substantially correspond to the length of the reinforcements of the blade. The reinforcements may be either some extra structures placed inside the wind turbine blade or extra sheets of fibre to partially increase the stiffness of the wind turbine blade. Wind turbine blade 7 may be engaged by the tool 100 at the position where the reinforcement is arranged.

However, the tool 100 may be configured to receive the blade at different positions along the length of the wind turbine blade 7 having suitable strength or resistance. In some examples, the supporting surface may fit a region of the wind turbine blade comprised between half of the length of the wind turbine blade and the tip end. In some examples, the tool 100 may be configured to receive the cross-sections of the blade having longitudinal reinforcements.

The support structure 120 of the tool 100 may be lifted and/or lowered with respect to the ground G by the action of the lifting mechanism. Thus, the distance to the ground of some portions of the wind turbine blade may be adjusted to a predefined height. For instance, a tip end 72 of a wind turbine blade longer than 100 meters may be lowered from a first height of about 5 meters to a second height of less than 2 meters, specifically less than 1.6 meters. Accessibility of the wind turbine blade for performing post-moulding operations is considerably increased.

Figures 6, 7 and 8 show some examples of the support structure 120 positioned at different heights relative to the ground. Figure 6 shows the tool 100 having the support structure 120 in a low position according to one example of the present disclosure. In Figure 6, the wind turbine blade 7 is not supported by the support structure 120, so the wind turbine blade 7 is supported by any other suitable device, e.g. by scaffolds.

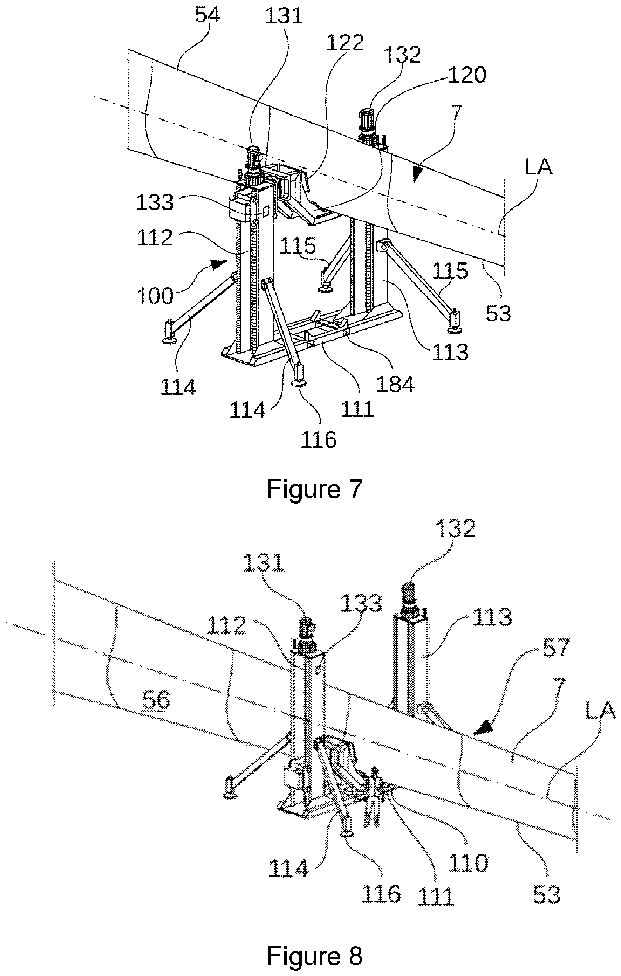

Figure 7 shows the tool in Figure 6 having the support structure in a high position. In Figure 7, the supporting surface 121 fits a region of the wind turbine blade 7. In this figure, the wind turbine blade 7 is supported, at least partially, by the tool 100. The height of the tip end 72 of Figure 7 is above 5 meters.

In Figure 8, the support structure 120 and thus the wind turbine blade 7 have been lowered from the high position of Figure 7 to an operating height of Figure 8. The height of the tip end 72 of this figure is below 2 meters, specifically below 1.6 meters. Therefore, the lowered wind turbine blade 7 may be more accessible to the staff as can be seen in Figure 8.

In the example of Figures 6 - 8, the outer surface of the region of the wind turbine blade 7 comprises the leading edge 53. Thus, the supporting surface 121 is configured to fit at least a portion of the leading edge 53 of the wind turbine blade 7 when the wind turbine blade is in a post-moulding position. The supporting surface 121 of these figures comprises a bottom portion fitting surface 181. The bottom portion fitting surface 181 comprises a shape that fits or engages the outer shape of the leading edge. The blade may thus be secured at a specific angle or orientation. The post-moulding position of these figures is an upright position at which the leading edge 53 faces the ground G and the chord is substantially perpendicular to the ground. Accordingly, the supporting surface 121 may be configured to fit the shape of an outer shape of the portion of the leading edge 53 when the cross-section of the wind turbine blade 7 is in the upright position. In further examples, the supporting surface may comprise a shape that fits a portion of the leading edge when the chord of the blade forms an acute angle relative to the ground.

In these examples, the supporting surface 121 is further configured to fit a region of a pressure side 56 and a region of a suction side 57 of the wind turbine blade 7. In some examples, the supporting surface 121 may be configured to fit a region of the pressure side or a region of the suction side. The supporting surface 121 of these figures comprises a pressure side fitting surface 122 to fit the region of the pressure side and a suction side fitting surface 123 to fit the region of the suction side 57. The bottom portion fitting surface 181 is arranged between the pressure side fitting surface 122 and the suction side fitting surface 123.

Therefore, the supporting surface 121 of these examples comprises a generally U-shaped profile. In these examples, there is a gap between the pressure side fitting surface 122 and the bottom portion fitting surface 181 and between the suction side fitting surface 123 and the bottom portion fitting surface 181. In further examples, the pressure side fitting surface 122 may be connected to the suction side fitting surface through the bottom portion fitting surface 181.

The bottom portion fitting surface 181 of these figures fits a region of the leading edge of the wind turbine blade. The bottom portion fitting surface 181 comprises a curved-shaped and substantially defines a U-shaped cross-section.

In some examples, the supporting surface 121 may comprise a pad and/or a portion of a strap. The supporting surface 121 of these examples comprises a set of pads, e.g. three pads. These three pads may respectively fit a portion of the suction side, a portion of the leading edge and a portion of the pressure side of the blade. In other examples, a single pad may cover the extension of the supporting surface 121, e.g. continuously extending from the pressure side fitting surface to the suction side fitting surface.. The pad or pads may be arranged to contact the outer surface of the region of the wind turbine blade 7. The pad or pads may be manufactured out of rubber or the like.

The support structure 120 of these figures comprises a cradle. The cradle comprises an opening 190 to receive the region of the wind turbine blade 7. The supporting surface 121 may be arranged at the opening of the cradle. The cradle may comprise a substantially U-shaped cross-section.

In the examples of Figures 6, 7 and 8, the base 110 comprises a connecting structure 111 configured to face the leading edge 53 of the wind turbine blade 7. The connecting structure 111 of these figures comprises lifting holes 184 configured to receive forks of a forklift. The lifting holes 184 may be arranged in such a way that the lifting holes 184 are substantially parallel to the longitudinal axis LA of the wind turbine blade 7 when the wind turbine blade is received by the tool 100. The lifting holes 184 may also be arranged substantially perpendicular to the longitudinal axis LA when the wind turbine blade is received by the tool 100.

In these examples, the base 110 further comprises a pressure side column 112 and a suction side column 113 configured to be removably attached to the connecting structure 111. The pressure side column 112 and the suction side column 113 may be placed opposite each other with respect to the support structure 120. When the wind turbine blade 7 is received by the supporting surface 121, the pressure side column 112 and the suction side column 113 may be placed opposite each other with respect to the longitudinal axis LA. The pressure side column 112 is thus adjacent to the pressure side of the wind turbine blade and the suction side column 113 to the suction side of the wind turbine blade when the blade is received by the tool. The cross-section of the wind turbine blade may thus be arranged between these side columns.

As the pressure side column and the suction side column are detachably connected to the connecting structure 111. The connecting structure 111 may be firstly positioned below the wind turbine blade and then the side columns may be attached to the connecting structure 111. Positioning the tool to receive the blade is consequently simplified.

The pressure side column 112 and the suction side column 113 may be configured to guide a lifting and lowering movement of the support structure 120.

The lifting mechanism 130 of these examples comprises a pressure side driving unit 131 associated with the pressure side column 112 and a suction side driving unit 132 associated with the suction side column 113. These driving units 131, 132 are configured to drive the lifting and lowering movement of the support structure 120. In these examples, the lifting mechanism further comprises a lift control unit 133 configured to control the operation of the driving units. Thus, the operation of the pressure side driving unit 131 and the suction side driving unit 132 may be synchronous. The pressure side driving unit 131 and the suction side driving unit may thus be substantially simultaneously operated. The lift control unit 133 may control the operation of the driving units 131, 132 in such a way that the support structure 120 is lifted or lowered within a predefined range of height. The lift control unit 133 may be arranged in any suitable position in the tool 100. In examples, the lift control unit 133 may be a separate unit in data communication with the rest of the tool 100.

In some examples, the lifting mechanism may comprise a screw jack associated with the pressure side column 112 and a screw jack associated with the suction side column 113. The screw jacks may be operatively connected to driving units 131, 132 and the support structure 120. In further examples, the lifting mechanism may comprise other suitable configurations, such as a hydraulic and/or pneumatic actuator.

In this figure, the base 110 comprises a pressure side support leg 114 hingedly attached to the pressure side column 112 and a suction side support leg 115 hingedly attached to the suction side column 113, in such a way that the support legs 114, 115 may be movable from a folded position to a deployed position, in which a distal end 116 of the support legs 114, 115 rests on the ground. The pressure side support leg 114 and the suction side support leg 115 in the deployed position may improve the stability of the tool 100. In some examples, support legs 114, 15 may be telescopic, so that the distal end 116 may be retracted in the folded position of the support legs 114, 115, and may be extended in the deployed position.

Although the base of the examples of Figures 6, 7 and 8 has two pressure side support legs 114 and two suction side support legs 115, the number of support legs 114, 115 may vary according to the case. In Figures 6, 7 and 8, one pressure side support leg 114 and one suction side support leg 115 are facing the tip end 72, and one pressure side support leg 114 and one suction side support leg 115 are facing the root end 71.

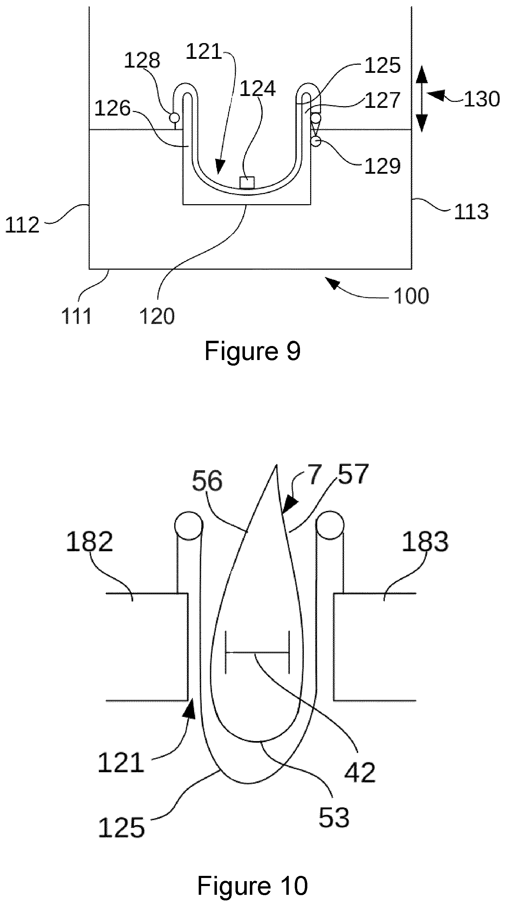

In some examples, the supporting surface 121 may comprise a pad 124 and/or a portion of a strap 125. This can be seen in Figure 9 that schematically illustrates a tool according to one example of the present disclosure. Although the example of Figure 9 includes a pad 124 and a portion of a strap 125, the pad 124 may be arranged in any of the examples of supporting surface 121 disclosed herein.

As explained before, a single pad 124 may cover the extension of the supporting surface 121In some examples, the supporting surface 121 may comprise a set of pads 124 arranged on the supporting surface 121. The pad 124 may be arranged to contact the outer surface of the region of the wind turbine blade 7. The pad 124 may be manufactured out of rubber or the like.

In the example of Figure 9, the supporting surface 121 comprises a portion of the strap 125 extending from the support structure suction side 126 to the support structure pressure side 127. The shape of the strap may be adapted to the shape of the region of the blade to be received. This allows using the same strap at different lengths of the wind turbine blade. The portion of strap 125 may be arranged in a substantially transversal direction to the longitudinal axis LA of the wind turbine blade 7.

The strap 125 may be rolled up or out about a reel 128 at either the support structure suction side 126 or the support structure pressure side 127. If the strap is rolled up the wind turbine blade 7 may be lifted, and if the strap is rolled out the wind turbine blade 7 may be lowered.

One end of the strap may be joined to the support structure 120 through a releasable fastener such as a hook 129. The releasable fastener may be arranged at a fastening end opposite to a reel end of the strap. The reel 128 and the hook 129 may be respectively positioned either in the support structure suction side 126 or the support structure pressure side 127.

The tool 100 in Figure 9 has a pressure side column 112 and a suction side column 113 as well. The support structure 120, and thus the strap 125, may be lifted and/or lowered by the lifting mechanism 130.

Figure 10 schematically illustrates a partial view of a tool according to one example of the present disclosure. The support structure 120 in Figure 10 has a pressure side seat 182 to face the pressure side 56 of the blade, and a suction side seat 183 to face the suction side 57 of the blade. The pressure side seat 182 and the suction side seat 183 are oriented opposite each other. The pressure side seat 182 and the suction side seat 183 have a corresponding part of the supporting surface 121 to support the pressure side 56 and the suction side 57. Thus, the pressure side seat 182 and the suction side seat 183 may act as clamp-like structures on the wind turbine blade 7. The wind turbine blade 7 may be held in position with respect to the longitudinal axis LA by virtue of the pressure side seat 182 and the suction side seat 183. A gap or clearance between the wind turbine blade 7 and the pressure side seat 182 and the suction side seat 183 has been illustrated for the sake of clarity. However, such a gap or clearance may be avoided in use.

In Figure 10, the strap 125 configured to receive and support the wind turbine, is positioned between the wind turbine blade 7 and the pressure side seat 182 and the suction side seat 183. The supporting surface 121 on the pressure side seat 182 fits the pressure side 56 and the supporting surface on the suction side seat 183 fits the suction side 57. The leading edge 53 is fitted by the strap 125.

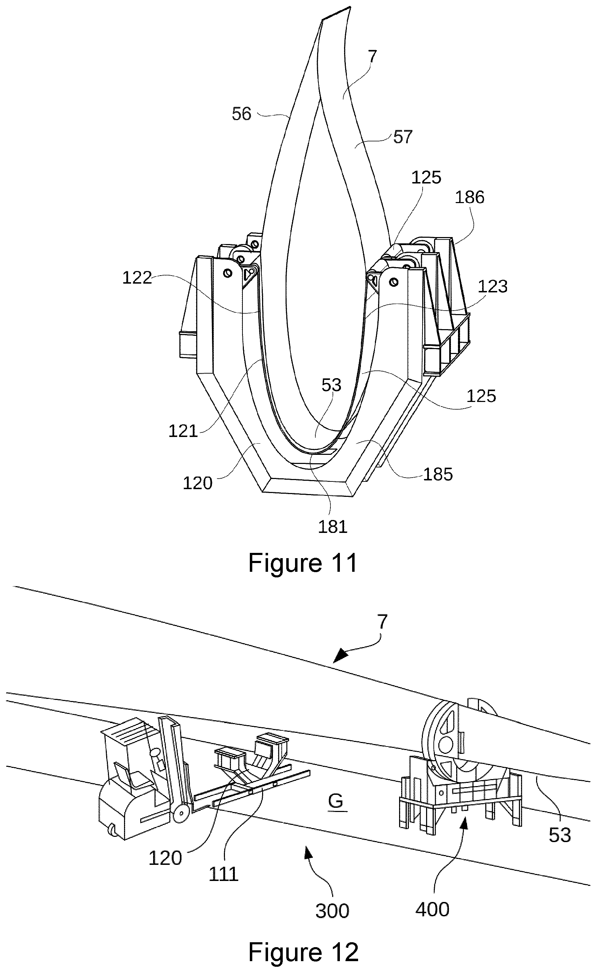

Figure 11 schematically illustrates a partial and perspective view of a support structure 120 according to an example of the present disclosure. The tool 100 of Figure 11 comprises a plurality of straps 125 arranged along a lengthwise direction from a root side 185 to a tip side 186 of the support structure 120. The straps 125 are arranged one after the other in the lengthwise direction, in such a way that the supporting surfaces 121 of the straps 125 can support and receive the outer surface of the portion of the wind turbine blade 7. Although the tool 100 comprises two straps 125 in Figure 11, the quantity of straps 125 may vary.

The straps 125 of Figure 11 are fixed or attached to support structure 120 through both ends of the strap 125.

In the examples of Figures 9, 10 and 11, the strap 125 is configured to achieve the dimensions above described with respect to the example of Figure 5, when the leading edge 53 is fitted by the supporting surface 121.

Figures 12 - 14 schematically show views of the assembly of the tool 100 in Figure 6 according to one example.

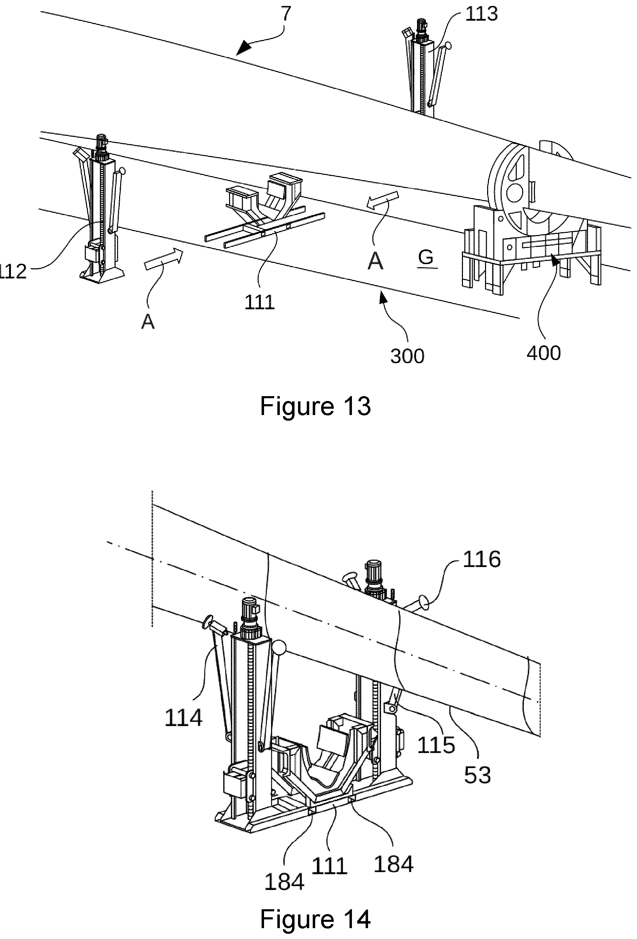

In Figures 12, 13 a supporting assembly 300 for supporting a wind turbine blade 7 in a post-moulding position, is disclosed. The supporting assembly 300 comprises a tool 100 according to any of the examples herein disclosed and a rotating system 400 configured to rotate the wind turbine blade 7 about its longitudinal axis LA. The rotating system 400 is configured to be arranged between the tool 100 and a tip end 72 of the wind turbine blade 7. The root end 71 may be supported by a root support. In some examples, the rotating system 400 may also be arranged between the root end 71 and the tool 100.

It can be seen in Figure 12 that the connecting structure 111 of the base 110 of the tool is arranged to face the leading edge 53 of the wind turbine blade 7. An example of support structure 120 resting on the connecting structure 111 is positioned under the wind turbine blade 7 at a predetermined position. The predetermined position may correspond to a reinforcement of the wind turbine blade 7 as described above. In the example of Figure 12, the support structure 120 and the connecting structure 111 have been carried and placed using a forklift.

The pressure side column 112 and the suction side column 113 are removably attached to the connecting structure 111. In Figure 13, arrows A denote directions followed to attach the pressure side column 112 and the suction side column 113 to the connecting structure 111. Pressure side column 112 and suction side column 113 may be engaged with the connecting structure 111, for instance through matching portions. The pressure side column 112 and the suction side column 113 may be brought in with a forklift or a self-propelled modular transporter to be positioned at both sides of the support structure 120.

In some examples, the support structure 120 and the connecting structure 111 may be carried and placed using an overhead crane. In such examples, the support structure 120, the connecting structure 111 and other parts as the pressure side column 112 and the suction side column 113 may have hooks to be suspended by the overhead crane.

In some examples, the pressure side column 112 and the suction side column 113 may be joined to the connecting structure 111 in such a way that the lifting mechanism 130 may be operatively connected to the support structure 120. In an example, the screw jack may be operatively connected to the support structure 120.

In Figure 14, a tool 100 is shown in which the pressure side column 112 and the suction side column 113 have been removably attached to the connecting structure 111. In Figures 13 and 14, the pressure side support leg 114 and the suction side support leg 115 are shown in a folded position. Once the pressure side column 112 and the suction side column 113 are removably attached to the connecting structure 111, the pressure side support leg 114 and the suction side support leg 115 may be brought to a deployed position where a distal end 116 contacts the ground G, as per Figure 7.

The tool 100 may be disassembled following a reverse order to the one described so far. The pressure side column 112 and the suction side column 113 may be moved away from the connecting structure 111.

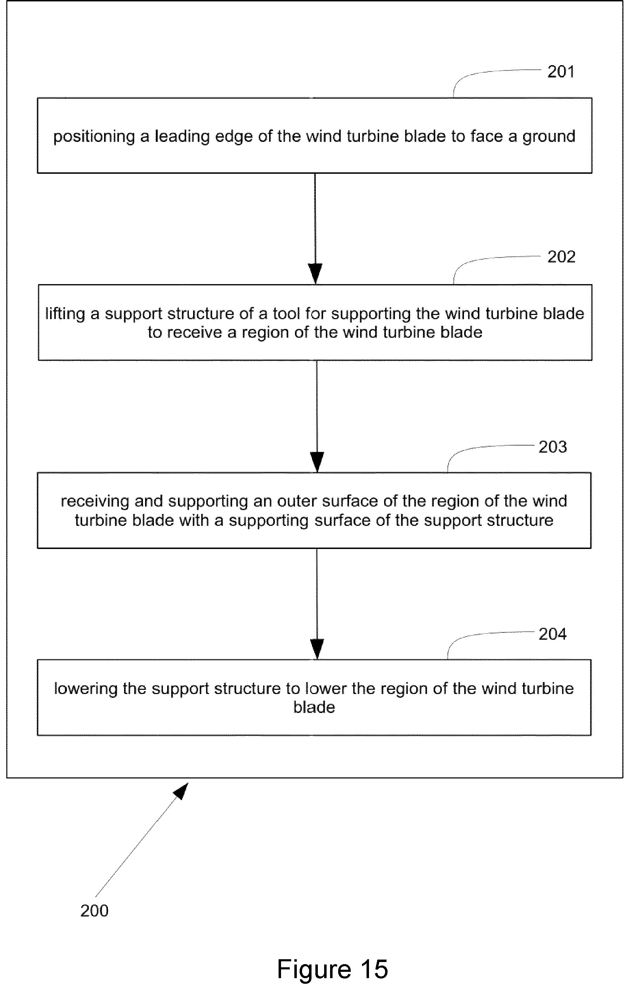

Figure 15 is a block diagram of a method 200 for supporting a wind turbine blade during post-moulding operations according to one example of the present disclosure. Method 200 may be implemented through any of examples of tools 100 herein disclosed.

The method 200 for supporting a wind turbine blade 7 during post-moulding operations, comprises positioning 201 the leading edge 53 of the wind turbine blade 7 to face the ground G. A leading edge 53 that has been positioned to face the ground can be seen in Figure 6.

In some examples, positioning 201 the leading edge 53 of the wind turbine blade 7 to face the ground G may comprise rotating the wind turbine blade 7 about its longitudinal axis LA. After moulding, the wind turbine blade 7 may be positioned so that the pressure side 56 or the suction side 57 is facing the ground G. The wind turbine blade 7 may be rotated clockwise or anti-clockwise about its longitudinal axis. The rotation may encompass any suitable angle, for instance, 90 degrees. The rotation may be performed through the rotating system 400.

The method further comprises lifting 202 the support structure 120 of the tool for supporting the wind turbine blade 7 to receive a region of the wind turbine blade and receiving and supporting 203 an outer surface of the region of the wind turbine blade with a supporting surface of the support structure. In Figure 7, the supporting surface 121 has been raised to receive and support the outer surface of the region. The lifting mechanism 130 may be actuated to raise the support structure 120 until the supporting surface 121 reaches the outer surface of the wind turbine blade 7. In an example, the lift control unit 133 may control the synchronous operation of the driving units 131, 132 to lift the support structure 120.

The method also comprises lowering 204 the support structure 120 to lower the region of the wind turbine blade. In Figure 8, the support structure 120 and so the supporting surface 121 have been lowered. The wind turbine blade 7 has been also lowered and the accessibility may be improved. The support structure 120 may be lowered actuating the driving units 131, 132 as described above. The support structure 120 may be lowered to a predetermined height.

In some examples, the method 200 may comprise arranging a connecting structure 111 of a base 110 of the tool, to face the leading edge 53 of the wind turbine blade 7. This can be seen in Figure 12.

Method 200 further comprises removably attaching the pressure side column 112 and the suction side column 113 to the connecting structure 111. This attachment may be seen in Figure 13, following directions represented by arrows A.

According to some examples, method 200 may comprise arranging the tool 100 at a position between half of the length of the wind turbine blade 7 and the tip end 72 of the wind turbine blade. This way, a clear path may be defined from the tool 100 to the tip end 72.

Method 200 may comprise removing the rotating system 400 configured to rotate the wind turbine blade 7 about its longitudinal axis LA. In some examples, removing the rotating system may comprise displacing the rotating system 400 towards the tip end 72 of the wind turbine blade 7. The rotating system may be manoeuvred all the way to the tip end 72 following the defined clear path.

The tool 100 may adjust the height of the wind turbine blade 7, e.g. the height of the tip end 72, to a predefined position to allow removal of the rotating system 400. This way, the use of an overhead crane (not illustrated) may be reduced or even avoided, for instance, in a manufacturing plant.

This written description uses examples to disclose the invention, including the preferred embodiments, and also to enable any person skilled in the art to practice the invention, including making and using any devices or systems and performing any incorporated methods. The patentable scope of the invention is defined by the claims. If reference signs related to drawings are placed in parentheses in a claim, they are solely for attempting to increase the intelligibility of the claim, and shall not be construed as limiting the scope of the claim.

## Claims

1. A tool (100) for supporting a wind turbine blade (7) in a post-moulding position, comprising:
a base (110) configured to rest on a ground (G);
a support structure (120) configured to receive a region of the wind turbine blade (7) when a leading edge (53) of the wind turbine blade (7) faces the ground, wherein the support structure (120) comprises a supporting surface (121) configured to receive and support an outer surface of the region of the wind turbine blade (7); and
a lifting mechanism (130) configured to move the support structure (120) upwards and/or downwards relative to the base (110);
wherein the base (110) comprises:
a connecting structure (111) configured to face the leading edge (53) of the wind turbine blade; the tool being **characterized in that** the base further comprises
a pressure side column (112) and a suction side column (113) configured to be removably attached to the connecting structure (111).

2. The tool (100) according to claim 1, wherein the supporting surface (121) is configured to fit the leading edge (53) of the wind turbine blade (7).

3. The tool (100) according to claim 2, wherein the supporting surface (121) is further configured to fit a region of a pressure side (56) and/or of a suction side (57) of the wind turbine blade (7).

4. The tool (100) according to claim 3, wherein the supporting surface (121) comprises a pressure side fitting surface (122) to fit the region of the pressure side (56) and a suction side fitting surface (123) to fit the region of the suction side (57).

5. The tool (100) according to any of claims 1 - 4, wherein the supporting surface (121) comprises a pad (124) and/or a portion of a strap (125).

6. The tool (100) according to claim 5, comprising:
a plurality of straps (125) arranged along a lengthwise direction from a root side (185) to a tip side (186) of the support structure (120).

7. The tool (100) according to any of claims 1 - 6, wherein the support structure (120) comprises a cradle having an opening (190) to receive the region of the wind turbine blade (7) and wherein the supporting surface is arranged at the opening (190) of the cradle.

8. The tool (100) according to any of claims 1 - 7, wherein the pressure side column (112) and the suction side column (113) are configured to guide a lifting/lowering movement of the support structure (120).

9. The tool (100) according to any of claims 1 - 8, wherein the lifting mechanism comprises:
a pressure side driving unit (131) associated with the pressure side column (112) and a suction side driving unit (132) associated with the suction side column (113), the driving units (131, 132) being configured to drive the movement of the support structure (120);
a lift control unit (133) configured to control an operation of the driving units.

10. The tool (100) according to claim 9, wherein the lifting mechanism (130) comprises a screw jack associated with the pressure side column (112) and a screw jack associated with the suction side column (113), and the screw jacks are operatively connected to driving units (131, 132) and the support structure (120).

11. The tool (100) according to any of claims 1 - 10, wherein the base (110) comprises:
a pressure side support leg (114) hingedly attached to the pressure side column (112) and a suction side support leg (115) hingedly attached to the suction side column (113), in such a way that the support legs (114, 115) are movable from a folded position to a deployed position in which a distal end (116) of the support legs (114, 115) rests on the ground.

12. A supporting assembly (300) for supporting a wind turbine blade in a post-moulding position, the supporting assembly comprising:
a tool (100) according to any of claims 1 - 11; and
a rotating system (400) configured to rotate the wind turbine blade (7) about its longitudinal axis (LA).

13. A method (200) for supporting a wind turbine blade during post-moulding operations using a tool according to any of claims 1 - 11, the method comprising:
positioning (201) a leading edge of the wind turbine blade to face a ground;
arranging a connecting structure of a base of the tool, to face the leading edge of the wind turbine blade;
removably attaching a pressure side column and a suction side column to the connecting structure.
lifting (202) a support structure of a tool for supporting the wind turbine blade to receive a region of the wind turbine blade;
receiving and supporting (203) an outer surface of the region of the wind turbine blade with a supporting surface of the support structure;
lowering (204) the support structure to lower the region of the wind turbine blade.

14. The method (200) according to claim 13, comprising:
arranging the tool at a position between half of the length of the wind turbine blade and the tip end of the wind turbine blade.

15. The method (200) according to any of claims 13 - 14, comprising:
removing a rotating system configured to rotate the wind turbine blade about its longitudinal axis.

## Patentansprüche

1. Ein Werkzeug (100) zum Stützen eines Windturbinenblatts (7) in einer Nachformposition, umfassend:
eine Basis (110), die dazu konfiguriert ist, auf einem Boden (G) zu ruhen;
eine Stützstruktur (120), die dazu konfiguriert ist, einen Bereich des Windturbinenblatts (7) aufzunehmen, wenn eine Vorderkante (53) des Windturbinenblatts (7) dem Boden zugewandt ist, wobei die Stützstruktur (120) eine Stützfläche (121) umfasst, die dazu konfiguriert ist, eine Außenfläche des Bereichs des Windturbinenblatts (7) aufzunehmen und zu stützen; und
einen Hebemechanismus (130), der dazu konfiguriert ist, die Stützstruktur (120) relativ zu der Basis (110) nach oben und/oder nach unten zu bewegen;
wobei die Basis (110) Folgendes umfasst:
eine Verbindungsstruktur (111), die dazu konfiguriert ist, der Vorderkante (53) des Windturbinenblatts zugewandt zu sein; wobei das Werkzeug **dadurch gekennzeichnet ist, dass** die Basis ferner eine druckseitige Säule (112) und eine ansaugseitige Säule (113) umfasst, die dazu konfiguriert sind, abnehmbar an der Verbindungsstruktur (111) befestigt zu werden.

2. Das Werkzeug (100) nach Anspruch 1, wobei die Stützfläche (121) dazu konfiguriert ist, zu der Vorderkante (53) des Windturbinenblatts (7) zu passen.

3. Das Werkzeug (100) nach Anspruch 2, wobei die Stützfläche (121) ferner dazu konfiguriert ist, in einen Bereich einer Druckseite (56) und/oder einer Ansaugseite (57) des Windturbinenblatts (7) zu passen.

4. Das Werkzeug (100) nach Anspruch 3, wobei die Stützfläche (121) eine druckseitige Passfläche (122), die zu dem Bereich der Druckseite (56) passt und eine ansaugseitige Passfläche (123), die zu dem Bereich der Ansaugseite (57) passt, umfasst.

5. Das Werkzeug (100) nach einem der Ansprüche 1 bis 4, wobei die Stützfläche (121) eine Auspolsterung (124) und/oder einen Abschnitt eines Riemens (125) umfasst.

6. Das Werkzeug (100) nach Anspruch 5, umfassend:
eine Vielzahl von Gurten (125), die entlang einer Längsrichtung von einer Wurzelseite (185) zu einer Spitzenseite (186) der Stützstruktur (120) angeordnet sind.

7. Das Werkzeug (100) nach einem der Ansprüche 1 bis 6, wobei die Stützstruktur (120) einen Träger mit einer Öffnung (190) zum Aufnehmen des Bereichs des Windturbinenblatts (7) umfasst und wobei die Stützfläche an der Öffnung (190) des Trägers angeordnet ist.

8. Das Werkzeug (100) nach einem der Ansprüche 1 bis 7, wobei die druckseitige Säule (112) und die ansaugseitige Säule (113) dazu konfiguriert sind, eine Hebe-/Senkbewegung der Stützstruktur (120) zu führen.

9. Das Werkzeug (100) nach einem der Ansprüche 1 bis 8, wobei der Hebemechanismus Folgendes umfasst:
eine druckseitige Antriebseinheit (131), die der druckseitigen Säule (112) zugeordnet ist, und eine ansaugseitige Antriebseinheit (132), die der ansaugseitigen Säule (113) zugeordnet ist, wobei die Antriebseinheiten (131, 132) dazu konfiguriert sind, die Bewegung der Stützstruktur (120) anzutreiben;
eine Hebesteuereinheit (133), die dazu konfiguriert ist, einen Betrieb der Antriebseinheiten zu steuern.

10. Das Werkzeug (100) nach Anspruch 9, wobei der Hebemechanismus (130) eine Schraubenwinde, die der druckseitigen Säule (112) zugeordnet ist, und eine Schraubenwinde, die der ansaugseitigen Säule (113) zugeordnet ist, umfasst und die Schraubenwinden mit den Antriebseinheiten (131, 132) und der Stützstruktur (120) wirkverbunden sind.

11. Das Werkzeug (100) nach einem der Ansprüche 1 bis 10, wobei die Basis (110) Folgendes umfasst:
ein druckseitiges Stützbein (114), das gelenkig an der druckseitigen Säule (112) angebracht ist, und ein ansaugseitiges Stützbein (115), das gelenkig an der ansaugseitigen Säule (113) derart angebracht ist, dass die Stützbeine (114, 115) von einer geklappten Position in eine ausgefahrene Position bewogen werden können, in welcher ein distales Ende (116) der Stützbeine (114, 115) auf dem Boden aufliegt.

12. Eine Stützbaugruppe (300) zum Stützen eines Windturbinenblatts in einer Nachformposition, wobei die Stützbaugruppe Folgendes umfasst:
ein Werkzeug (100) nach einem der Ansprüche 1 bis 11; und
ein Drehsystem (400), das dazu konfiguriert ist, das Windturbinenblatt (7) um seine Längsachse (LA) zu drehen.

13. Ein Verfahren (200) zum Stützen eines Windturbinenblatts während Nachformvorgänge unter Verwendung eines Werkzeugs nach einem der Ansprüche 1 bis 11, wobei das Verfahren Folgendes umfasst:
positionieren (201) einer Vorderkante des Windturbinenblatts, so dass diese einem Boden zugewandt ist;
anordnen einer Verbindungsstruktur einer Basis des Werkzeugs, so dass diese der Vorderkante des Windturbinenblatts zugewandt ist;
abnehmbares Anbringen einer druckseitigen Säule und einer ansaugseitigen Säule an der Verbindungsstruktur;
anheben (202) einer Stützstruktur eines Werkzeugs zum Stützen des Windturbinenblatts, um einen Bereich des Windturbinenblatts aufzunehmen;
aufnehmen und stützen (203) einer Außenfläche des Bereichs des Windturbinenblatts mit einer Stützfläche der Stützstruktur;
absenken (204) der Stützstruktur, um den Bereich des Windturbinenblatts abzusenken.

14. Das Verfahren (200) nach Anspruch 13, umfassend:
anordnen des Werkzeugs an einer Position zwischen der Hälfte der Länge des Windturbinenblatts und dem Spitzenende des Windturbinenblatts.

15. Das Verfahren (200) nach einem der Ansprüche 13 bis 14, umfassend:
entfernen eines rotierenden Systems, das dazu konfiguriert ist, das Windturbinenblatt, um seine Längsachse zu drehen.

## Revendications

1. Un outil (100) pour supporter une pale d'éolienne (7) dans une position de post-moulage, comprenant :
une base (110) configurée pour reposer sur un sol (G) ;
une structure de support (120) configurée pour recevoir une région de la pale d'éolienne (7) lorsqu'un bord d'attaque (53) de la pale d'éolienne (7) fait face au sol, dans lequel la structure de support (120) comprend une surface de support (121) configurée pour recevoir et supporter une surface extérieure de la région de la pale d'éolienne (7) ; et
un mécanisme de levage (130) configuré pour déplacer la structure de support (120) vers le haut et/ou vers le bas par rapport à la base (110) ;
dans lequel la base (110) comprend :
une structure de connexion (111) configurée pour faire face au bord d'attaque (53) de la pale d'éolienne ; l'outil étant **caractérisé en ce que** la base comprend en outre une colonne côté pression (112) et une colonne côté aspiration (113) configurées pour être fixées de manière amovible à la structure de connexion (111).

2. L'outil (100) selon la revendication 1, dans lequel la surface de support (121) est configurée pour son adaptation au bord d'attaque (53) de la pale d'éolienne (7).

3. L'outil (100) selon la revendication 2, dans lequel la surface de support (121) est en outre configurée pour son adaptation à une région d'un côté pression (56) et/ou d'un côté aspiration (57) de la pale d'éolienne (7).

4. L'outil (100) selon la revendication 3, dans lequel la surface de support (121) comprend une surface d'adaptation côté pression (122) pour son adaptation à la région du côté pression (56) et une surface d'adaptation côté aspiration (123) pour son adaptation à la région du côté aspiration (57).

5. L'outil (100) selon l'une quelconque des revendications 1 à 4, dans lequel la surface de support (121) comprend un rembourrage (124) et/ou une partie d'une courroie (125).

6. L'outil (100) selon la revendication 5, comprenant :
une pluralité de courroies (125) disposées le long d'une direction longitudinale d'un côté racine (185) à un côté pointe (186) de la structure de support (120).

7. L'outil (100) selon l'une quelconque des revendications 1 à 6, dans lequel la structure de support (120) comprend un berceau ayant une ouverture (190) pour recevoir la région de la pale d'éolienne (7) et dans lequel la surface de support est agencée au niveau de l'ouverture (190) du berceau.

8. L'outil (100) selon l'une quelconque des revendications 1 à 7, dans lequel la colonne côté pression (112) et la colonne côté aspiration (113) sont configurées de manière à guider un mouvement de levage/abaissement de la structure de support (120).

9. L'outil (100) selon l'une quelconque des revendications 1 à 8, dans lequel le mécanisme de levage comprend :
une unité d'entraînement côté pression (131) associée à la colonne côté pression (112) et une unité d'entraînement côté aspiration (132) associée à la colonne côté aspiration (113), les unités d'entraînement (131, 132) étant configurées pour entraîner le mouvement de la structure de support (120) ;
une unité de commande de levage (133) configurée pour commander une opération des unités d'entraînement.

10. L'outil (100) selon la revendication 9, dans lequel le mécanisme de levage (130) comprend un vérin à vis associé à la colonne côté pression (112) et un vérin à vis associé à la colonne côté aspiration (113), et les vérins à vis sont connectés de manière opérationnelle aux unités d'entraînement (131, 132) et à la structure de support (120).

11. L'outil (100) selon l'une quelconque des revendications 1 à 10, dans lequel la base (110) comprend :
un pied de support côté pression (114) fixé de manière articulée à la colonne côté pression (112) et un pied de support côté aspiration (115) fixé de manière articulée à la colonne côté aspiration (113), de telle sorte que les pieds de support (114, 115) peuvent être déplacés d'une position pliée à une position déployée dans laquelle une extrémité distale (116) des pieds de support (114, 115) repose sur le sol.

12. Un ensemble de support (300) pour supporter une pale d'éolienne dans une position de post-moulage, l'ensemble de support comprenant :
un outil (100) selon l'une quelconque des revendications 1 à 11 ; et
un système rotatif (400) configuré pour faire tourner la pale d'éolienne (7) autour de son axe longitudinal (LA).

13. Un procédé (200) pour supporter une pale d'éolienne pendant des opérations de post-moulage en utilisant un outil selon l'une quelconque des revendications 1 à 11, le procédé comprenant :
positionner (201) un bord d'attaque de la pale d'éolienne de manière qu'il fasse face à un sol ;
disposer une structure de connexion d'une base de l'outil, de manière qu'il fasse face au bord d'attaque de la pale de l'éolienne ;
attacher de manière amovible une colonne côté pression et une colonne côté aspiration à la structure de connexion ;
soulever (202) une structure de support d'un outil pour supporter la pale d'éolienne afin de recevoir une région de la pale d'éolienne ;
recevoir et supporter (203) une surface extérieure de la région de la pale d'éolienne avec une surface de support de la structure de support ;
abaisser (204) la structure de support de manière à abaisser la région de la pale d'éolienne.

14. Le procédé (200) selon la revendication 13, comprenant :
disposer l'outil à une position comprise entre la moitié de la longueur de la pale de l'éolienne et l'extrémité de pointe de la pale de l'éolienne.

15. Le procédé (200) selon l'une quelconque des revendications 13 à 14, comprenant :
retirer un système rotatif configuré pour faire tourner la pale de l'éolienne autour de son axe longitudinal.
